# EUROPEAN PATENT APPLICATION

(11) **EP 4 005 978 A1**
(43) Date of publication of application: **01.06.2022**
(21) Application number: 20845071.8
(22) Date of filing: 17.07.2020
(51) Int. Cl.: C01B 39/46, B01D 15/00, B01J 20/18, B01J 20/30, B01J 29/70

(54) **HYDROPHOBIC ZEOLITE, METHOD FOR PRODUCING SAME AND USE OF SAME**

(30) Priority: 25.07.2019 JP 2019137110; 10.03.2020 JP 2020040789
(71) Applicant: Tosoh Corporation, Shunan-shi, Yamaguchi 746-8501 (JP)
(72) Inventor: OKANIWA, Hiroshi, Shunan-shi Yamaguchi 746-8501 (JP); FUKUI, Megu, Shunan-shi Yamaguchi 746-8501 (JP)
(74) Representative: TBK
(86) International application number: PCT/JP2020/027876
(87) International publication number: WO 2021/015129

(57) **Abstract**

To provide a hydrophobic zeolite having both high hydrophobicity and high organic compound adsorption capability, which have not been achieved by conventional zeolites.

A hydrophobic zeolite which has a water adsorption of (6 g/100 g zeolite) or less at 25°C at RH 60% and a toluene adsorption of (9 g/100 g zeolite) or more at 25°C under 0.01 kPa.

## Description

### TECHNICAL FIELD

The present invention relates to a hydrophobic zeolite, its production method and its application. The hydrophobic zeolite of the present invention is useful, for example, for applications in which an organic compound is to be selectively removed or recovered by adsorption from a mixed gas containing water vapor, and for catalyst applications to be used for reaction process competitive with water.

### BACKGROUND ART

Organic compounds discharged from painting equipment, printing equipment, industrial product cleaning equipment, etc., are considered to be air pollutants such as suspended particulate matter and photochemical oxidants, and reduction in their discharge is required. To reduce such organic compounds, various adsorbents for organic compounds are under development.

In recent years, an adsorbent for organic compounds using a zeolite has been proposed. However, in general, since a zeolite has a large water adsorption, the adsorption of volatile organic compounds relatively decreases, and it will require a large quantity of energy to remove the adsorbed organic compounds and water by heating thereby to regenerate the adsorbent. Accordingly, a zeolite having a small water adsorption, that is a hydrophobic zeolite, has been desired.

As a zeolite having relatively high hydrophobicity, Patent Document 1 proposes a BEA zeolite having a SiO₂/Al₂O₃ molar ratio improved by an acid treatment. However, the zeolite described in Patent Document 1 had a water adsorption capacity at a level of from 1.0 to 5.0% at P/Po=0.1 corresponding to a relative humidity of 10%, and no hydrophobicity sufficient for an adsorbent for organic compounds has not been obtained only by an acid treatment.

Further, Patent Document 2 proposes a hydrocarbon adsorbent comprising a BEA zeolite having a SiO₂/Al₂O₃ molar ratio of 300 or higher. The hydrocarbon adsorbent described in Patent Document 2 desorbs the hydrocarbons adsorbed on the zeolite at high temperature and is thereby insufficient as an adsorbent for organic compounds which is required to desorb the adsorbate at low temperature.

### PRIOR ART DOCUMENTS

### PATENT DOCUMENTS

Patent Document 1: Japanese Patent No. 3429011
Patent Document 2: JP-A-2008-080195

### DISCLOSURE OF INVENTION

### TECHNICAL PROBLEM

The object of the present invention is to provide a hydrophobic zeolite having both high hydrophobicity and high organic compound adsorption capability, which have not been achieved by conventional zeolites.

### SOLUTION TO PROBLEM

The present inventors have conducted extensive studies to achieve the above object and found that the object is achieved by a specific hydrophobic zeolite, and accomplished the present invention.

That is, the present invention resides in a hydrophobic zeolite which has a water adsorption of (6 g/100 g zeolite) or less at 25°C at a relative humidity (hereinafter sometimes referred to as "RH") of 60% and a toluene adsorption of (9 g/100 g zeolite) or more at 25°C under 0.01 kPa. The hydrophobic zeolite is preferably a hydrophobic zeolite produced without using a fluorine compound, so that it has both high hydrophobicity and high organic compound adsorption capability.

That is, the present invention provides the following [1] to [13].
[1] A hydrophobic zeolite which has a water adsorption of (6 g/100 g zeolite) or less at 25°C at RH 60% and a toluene adsorption of (9 g/100 g zeolite) or more at 25°C under 0.01 kPa.
[2] The hydrophobic zeolite according to the above [1], which has a BEA structure.
[3] The hydrophobic zeolite according to the above [1] or [2], which has an amount of hydroxy groups of 3×10²⁰ groups/g or less, calculated from the sum of the integrated areas of the peak in the vicinity of chemical shift 1.8 ppm and the peak in the vicinity of 2.2 ppm in a ¹H MAS NMR spectrum, and an amount of hydroxy groups of 0.1×10²⁰ groups/g or less calculated from the integrated area of the peak in the vicinity of 0.7 ppm.
[4] The hydrophobic zeolite according to any one of the above [1] to [3], which has a crystal size of from 0.02 to 2.0 µm.
[5] The hydrophobic zeolite according to any one of the above [1] to [4], which contains one or more metals selected from the group consisting of sodium, potassium, cesium, iron, copper, silver, platinum, ruthenium, rhodium, palladium and iridium.
[6] The hydrophobic zeolite according to any one of the above [1] to [5], which has a SiO₂/Al₂O₃ molar ratio within a range of from 100 to 500.
[7] A method for producing the hydrophobic zeolite as defined in any one of the above [1] to [6], which comprises bringing a zeolite to be a base material into contact with an acidic solution and then into contact with water vapor at a temperature of from 600°C to 900°C.
[8] The hydrophobic zeolite according to any one of the above [1] to [5], which has a SiO₂/Al₂O₃ molar ratio within a range of from 10 to 100.
[9] A method for producing the hydrophobic zeolite as defined in any one of the above [1] to [5] and [8], which comprises bringing a zeolite to be a base material into contact with water vapor at a temperature of from 500°C to 900°C.
[10] The method for producing the hydrophobic zeolite according to the above [9], wherein the zeolite to be a base material is a zeolite crystallized without using an organic structure-directing agent.
[11] The method for producing the hydrophobic zeolite according to the above [9], wherein the zeolite to be a base material is a zeolite crystallized by using an organic structure-directing agent, and the method of bringing the zeolite into contact with water vapor at a temperature of from 500 to 900°C is a method of bringing the zeolite into contact with the water vapor in a step of thermally decomposing the organic structure-directing agent.
[12] An adsorbent for organic compounds, which contains the hydrophobic zeolite as defined in any one of the above [1] to [6] and [8].
[13] A method for removing an organic compound, which comprises bringing the adsorbent for organic compounds as defined in the above [12] into contact with a fluid containing at least one organic compound to remove the organic compound from the fluid.

### ADVANTAGEOUS EFFECTS OF INVENTION

A hydrophobic zeolite having both high hydrophobicity and high organic compound adsorption capability, which have not been achieved by conventional zeolites, is provided.

### BRIEF DESCRIPTION OF DRAWINGS

Fig. 1 is adsorption isotherms of water at 25°C in Examples, Comparative Examples and Reference Example.
Fig. 2 is adsorption isotherms of toluene at 25°C in Examples, Comparative Examples and Reference Example.
Fig. 3 is ¹H MAS NMR spectra in Examples and Comparative Examples.
Fig. 4 is ¹H MAS NMR spectra (Y axis of Fig. 3 magnified 5 times) in Examples and Comparative Examples.
Fig. 5 is adsorption isotherms of water at 25°C in Examples and Comparative Examples.
Fig. 6 is adsorption isotherms of toluene at 25°C in Examples.
Fig. 7 is ¹H MAS NMR spectra in Examples and Comparative Example.
Fig. 8 is ¹H MAS NMR spectra (Y axis of Fig. 7 magnified 5 times) in Examples and Comparative Example.

### DESCRIPTION OF EMBODIMENTS

Now, the present invention will be described in detail.

The present invention resides in a hydrophobic zeolite which has a water adsorption of (6 g/100 g zeolite) or less at 25°C at RH 60% and a toluene adsorption of (9 g/100 g zeolite) or more at 25°C under 0.01 kPa.

In the present invention, the water adsorption is the equilibrium adsorption of water at a temperature of 25°C under an equilibrium pressure of P/Po=0.6 under P=1.90 kPa (RH 60%), calculated as the mass per 100 g of the zeolite, and the toluene adsorption is the equilibrium adsorption at a temperature of 25°C under an equilibrium pressure of P=0.01 kPa, calculated as the mass per 100 g of the zeolite. One with a smaller water adsorption is evaluated to be "highly hydrophobic", and one with a larger toluene adsorption is evaluated to have "high organic compound adsorption capability". And, the zeolite of the present invention is characterized by having both high hydrophobicity and high organic compound adsorption capability, by having a water adsorption at 25°C at RH 60% of (6 g/100 g zeolite) or less, and a toluene adsorption at 25°C under 0.01 kPa of (9 g/100 g zeolite) or more. Further, the zeolite of the present invention has a water adsorption at 25°C at RH 60% of preferably (5 g/100 g zeolite) or less, more preferably (4 g/100 g zeolite) or less. The lower limit of the water adsorption is not limited, and is preferably lower. The toluene adsorption at 25°C under 0.01 kPa is preferably (10 g/100 g zeolite) or more, more preferably (10.5 g/100 g zeolite) or more. The upper limit of the toluene adsorption is not limited, and is preferably higher.

The hydrophobic zeolite of the present invention has a water adsorption at 25°C at RH 10% of preferably (1 g/100 g zeolite) or less, more preferably (0.5 g/100 g zeolite) or less. The lower limit of the water adsorption is not limited and is preferably lower.

The hydrophobic zeolite of the present invention may have, for example, a BEA structure, a MEI structure, or a MSE structure, and in order that it has high organic compound adsorption capability, it preferably has a BEA structure. The BEA structure, MEI structure, and MSE structure are zeolite structures classified into "*BEA", "MEI", and "MSE" by International Zeolite Association.

The hydrophobic zeolite of the present invention preferably has an amount of hydroxy groups of 3×10²⁰ groups/g or less, calculated from the sum of the integrated areas of the peak in the vicinity of chemical shift 1.8 ppm and the peak in the vicinity of 2.2 ppm in a ¹H MAS NMR spectrum, and an amount of hydroxy groups of 0.1×10²⁰ groups/g or less calculated from the integrated area of the peak in the vicinity of 0.7 ppm.

¹H MAS NMR was measured by a solid-state NMR instrument Varian nuclear magnetic resonance spectrometers VNMRS-400, while a sample tube was rotated at a number of revolutions of 15 kHz. The chemical shift was on the basis of the chemical shift of tetramethylsilane (assigned as 0 ppm). The amount of the hydroxy groups was quantitatively determined in accordance with a calibration curve of hydrogen amount prepared from benzene in deuterated dimethylsulfoxide. Further, as a sample, a sample dehydrated by vacuum deaeration at 400°C for 5 hours was used.

The hydrophobic zeolite of the present invention is characterized in that in a ¹H MAS NMR spectrum, a main peak in the vicinity of chemical shift 1.8 ppm and a shoulder peak in the vicinity of 2.2 ppm appear, so that the hydrophobic zeolite has high hydrophobicity. Further, the amount of hydroxy groups calculated from the sum of the integrated areas of the peak in the vicinity of chemical shift 1.8 ppm and the peak in the vicinity of 2.2 ppm in the ¹H MAS NMR spectrum is preferably 3×10²⁰ groups/g or less, more preferably 2.5×10²⁰ groups/g or less. The amount of hydroxy groups calculated from the integrated area of the peak in the vicinity of 0.7 ppm is preferably 0.1×10²⁰ groups/g or less, more preferably 0.07×10²⁰ groups/g or less. It is further preferred that no peak in the vicinities of 4 ppm and 5 ppm appears.

The hydrophobicity of the hydrophobic zeolite of the present invention described above is suggested to result from a low content of hydroxy groups estimated from the above ¹H MAS NMR measurement.

The hydrophobic zeolite of the present invention has a crystal size of preferably from 0.02 µm to 2.0 µm, more preferably from 0.03 µm to 1.0 µm. When the crystal size is 0.02 µm or larger, physical properties suitable for handling in forming or coating on a honeycomb substate can be obtained, and when it is 2.0 µm or smaller, a decrease in adsorption capability due to deteriorated diffusion of adsorbates in the crystals can be suppressed.

The hydrophobic zeolite of the present invention may contain, from the viewpoint of higher adsorption selectivity and heat resistance when used as an adsorbent for organic compounds and with a view to imparting functions such as oxidative decomposition of adsorbed organic compounds, one or more metals selected from the group consisting of sodium, potassium, cesium, iron, copper, silver, platinum, ruthenium, rhodium, palladium and iridium.

The method of incorporating the metal component is not particularly limited, and an ion exchange method, an impregnation method and an evaporation-to-dryness method may, for example, be used. The ion exchange method may be a method of bringing the zeolite and a solution containing desired ions into contact with each other until the amount of ions in the zeolite reaches the desired concentration. A conventional ion exchange method such as a batch method and a flow method may be applicable.

In the present invention, when an adsorbent for organic compounds in the form of a formed product or a honeycomb structure is to be produced, either of incorporating the metal into a zeolite powder and forming the zeolite powder into a formed product or a honeycomb structure, and forming a zeolite powder into a formed product or a honeycomb structure and incorporating the metal, is possible.

Of the hydrophobic zeolite of the present invention, not only with a view to achieving both high hydrophobicity and high degree of crystallinity but also from the viewpoint of reduction of waste acids, the SiO₂/Al₂O₃ molar ratio is within a range of from 10 to 100, preferably from 15 to 90, more preferably from 30 to 80.

Further, of the hydrophobic zeolite of the present invention, with a view to achieving both high hydrophobicity and high degree of crystallinity, the SiO₂/Al₂O₃ molar ratio is also preferably within a range of from 100 to 500, more preferably from 300 to 480.

Now, the method for producing the hydrophobic zeolite of the present invention will be described.

The production method is not particularly limited so long as the hydrophobic zeolite of the present invention can be produced, and may be a method of bringing a zeolite to be a base material into contact with water vapor at a temperature of from 500°C to 900°C. The purpose of this production method is to increase hydrophobicity by subjecting the zeolite to be a base material to water vapor treatment. The hydrophobic zeolite to be obtained by the production method is characterized by having a water adsorption at 25°C at RH 60% of (6 g/100 g zeolite) or less.

As the zeolite to be a base material, a synthetic zeolite having a BEA structure, obtainable without using fluorine at the time of production can suitably be used.

As a method for producing the synthetic zeolite having a BEA structure, for example, a method of crystallizing a mixture containing a silica source, an alumina source, an alkali source and as the case requires a structure-directing agent (hereinafter sometimes referred to as "raw material mixture") under hydrothermal conditions may be mentioned.

As the silica source, for example, colloidal silica, amorphous silica, sodium silicate, tetraethyl orthosilicate, or aluminosilicate gel may be used.

As the alumina source, for example, aluminum sulfate, sodium aluminate, aluminum hydroxide, aluminum chloride, aluminosilicate gel, or metallic aluminum may be used. The silica source and the alumina source are preferably in a form to be sufficiently mixed with other raw materials.

As the alkali source, for example, a salt such as a hydroxide, a halide, a sulfate, a nitrate or a carbonate of sodium, potassium or ammonium, or an alkali component in an aluminate, a silicate or an aluminosilicate gel may be used.

A structure-directing agent may also be used as the case requires. As the structure-directing agent, for example, tetraethylammonium hydroxide or tetraethylammonium bromide may be used.

As the zeolite to be a base material, a zeolite synthesized by a method without adding an organic structure-directing agent called OSDA-free synthesis, a zeolite synthesized by converting the structure of a zeolite having other structure, a zeolite synthesized e.g. by dry gel conversion, etc., may also suitably be used.

Crystallization of the zeolite may be conducted by using an autoclave, and the temperature for crystallization is 100°C or higher and 250°C or lower, preferably 110°C or higher and 200°C or lower, more preferably 120°C or higher and 190°C or lower. The crystallization time is 12 hours or longer and 96 hours or shorter, preferably 14 hours or longer and 84 hours or shorter, more preferably 16 hours or longer and 72 hours or shorter. Crystallization may be conducted either with or without stirring.

After completion of the crystallization, solid liquid separation is conducted and the excess alkali solution may be washed away e.g. with pure water or warm water. The zeolite may be dried after washed. The drying temperature should be 80°C or higher and 200°C or lower, preferably 90°C or higher and 190°C or lower. When the structure-directing agent is contained, it may be removed by thermal decomposition treatment after drying.

The hydrophobic zeolite of the present invention exhibits higher hydrophobicity when the SiO₂/Al₂O₃ molar ratio is higher. Further, when it is used as an adsorbent, the higher the SiO₂/Al₂O₃ molar ratio is, the more the reactivity of adsorbed molecules can be suppressed. Further, when it is used as a catalyst, the reactivity and the selectivity can be controlled by adjusting the SiO₂/Al₂O₃ molar ratio. Accordingly, the above synthesized zeolite may be brought into contact with an acidic solution as the case requires to adjust the zeolite to be a base material to have a desired SiO₂/Al₂O₃ molar ratio.

The hydrophobic zeolite of the present invention may be suitably produced by bringing the above zeolite to be a base material into contact with water vapor at a concentration of preferably from 20 to 100 vol%, more preferably from 40 to 100 vol% at a temperature of from 500°C to 900°C, preferably from 600 to 850°C for from 30 minutes to 5 hours. When the concentration of the water vapor is from 20 vol% to 100 vol%, more excellent hydrophobicity will be exhibited. Further, when the contact temperature is form 600°C to 850°C, more excellent hydrophobicity and a higher degree of crystallization will be achieved.

As the zeolite to be a base material, in order to maintain the pore structure, a zeolite of a proton type having the alkali metal present at the time of synthesis removed, or of an ammonia type, is preferred. When a zeolite containing an alkali metal is used, it is preferred to bring the zeolite into contact with water vapor at a lower temperature, at a lower water vapor concentration, or for a shorter time, among the above water vapor contact conditions.

In the present invention, as the zeolite to be a base material used for production of the hydrophobic zeolite having a SiO₂/Al₂O₃ molar ratio within a range of from 10 to 100, preferably from 15 to 90, more preferably from 30 to 80, which is one of preferred embodiments from the viewpoint of reduction of waste acids, a zeolite containing the structure-directing agent obtained after completion of the crystallization may be used as it is, a zeolite after having the structure-directing agent used for the production removed may be used, or a zeolite having a SiO₂/Al₂O₃ molar ratio adjusted to be from 10 to 100, obtained by removing the structure-directing agent and bringing the zeolite into contact with an acidic solution for dealumination may be used.

The hydrophobic zeolite of the present invention may be more suitably be produced by bringing the zeolite to be a base material into contact with water vapor at a concentration of preferably from 20 to 100 vol%, more preferably from 40 to 100 vol% at a temperature of from 500°C to 900°C, more preferably from 600 to 850°C for from 30 minutes to 5 hours. When the concentration of the water vapor is from 20 vol% to 100 vol%, more excellent hydrophobicity will be achieved. Further, when the contact temperature is from 600°C to 850°C, more excellent hydrophobicity and a higher degree of crystallization will be achieved.

When the zeolite to be a base material is a zeolite crystallized by using an organic structure-directing agent, the hydrophobic zeolite of the present invention may be produced by bringing the zeolite into contact with water vapor under the above conditions after the organic structure-directing agent is thermally decomposed or during the process of thermally decomposing the organic structure-directing agent.

As the zeolite to be a base material, in order to maintain the pore structure, a zeolite of a proton type having the alkali metal present at the time of synthesis removed, or of an ammonia type, is preferred. When a zeolite containing an alkali metal is used, it is preferred to bring the zeolite into contact with water vapor at a lower temperature, at a lower water vapor concentration, or for a shorter time, among the above water vapor contact conditions.

In the present invention, as the zeolite to be a base material used for production of the hydrophobic zeolite having a SiO₂/Al₂O₃ molar ratio within a range of from 100 to 500, preferably from 300 to 480, which is one of preferred embodiments with a view to achieving both high hydrophobicity and a high degree of crystallization, a zeolite having the structure-directing agent used for the production removed is preferred.

The hydrophobic zeolite of the present invention can be produced by brining such a zeolite to be a base material into contact with an acidic solution.

The production method is not particularly limited so long as the hydrophobic zeolite of the present invention is produced, and for example, a production method of brining the zeolite to be a base material into contact with an acidic solution and then into contact with water vapor at a temperature of from 600°C to 900°C may be mentioned.

In the present invention, an "acidic solution" means a solution having a pH of 3 or lower, and is preferably a solution having a pH of 2 or lower.

The acid to be used for the acidic solution may be any of an inorganic acid, an organic acid an a mixture thereof, and is preferably an inorganic acid hydrochloric acid, sulfuric acid or nitric acid.

The amount of the acid in the acidic solution is preferably from 10 to 100 equivalents, more preferably from 20 to 80 equivalents of the aluminum in the zeolite.

Further, when the zeolite is brought into contact with the acidic solution, the acidic solution is preferably heated to 40°C to 95°C, more preferably 50°C to 95°C to promote dealumination.

Dealumination with the acidic solution may be conducted once, or may be repeated twice or more until the desired SiO₂/Al₂O₃ molar ratio is achieved. By such dealumination, the SiO₂/Al₂O₃ molar ratio may be adjusted to, for example, from 100 to 500, preferably from 300 to 480.

In the present invention, the hydrophobic zeolite having a SiO₂/Al₂O₃ molar ratio within a range of from 100 to 500, preferably from 300 to 480, which is one of preferred embodiments, may be produced by bringing the dealuminated zeolite to be a base material, obtained by dealumination, into contact with water vapor at a concentration of preferably from 20 to 100 vol%, more preferably from 40 to 100 vol% at a temperature of from 600°C to 900°C, more preferably from 700 to 850°C. When the concentration of the water vapor is from 20 vol% to 100 vol%, more excellent hydrophobicity will be achieved. Further, when the contact temperature is from 600°C to 900°C, more excellent hydrophobicity and a higher degree of crystallization will be achieved.

An adsorbent for organic compounds, containing the hydrophobic zeolite of the present invention, has excellent effects particularly as an adsorbent for volatile organic compounds. By the adsorbent for organic compounds, it is possible to remove or recover organic compounds in an atmosphere under high humidity or in water by adsorption, while the influence of water is reduced. Accordingly, the adsorbent for organic compounds is useful for a method of removing an organic compound by bringing the adsorbent into contact with a fluid containing at least one organic compound to remove the organic compound from the fluid, and for example, it is useful as an adsorbent to be used for removing/recovering an organic compound in an exhaust gas discharged from painting equipment, printing equipment, industrial product cleaning equipment, etc., or in waste water, by adsorption, or as an adsorbent for removing an organic hydrocarbon component in an automobile exhaust gas by adsorption.

A catalyst containing the hydrophobic zeolite of the present invention is useful as a catalyst which reduces reaction inhibition by water, in the reaction of hydrocarbons in a reaction system where water coexists or is a byproduct, when the process of adsorption of the reactants on the zeolite catalyst competes with adsorption of water.

The hydrophobic zeolite of the present invention may be used as an adsorbent for organic compounds in a powder form as it is produced, or may be used as a formed product in a desired form such as beads, pellets or trefoils, or may be used in the form of a honeycomb structure obtained by forming a powder of the hydrophobic zeolite of the present invention into a slurry and applying the slurry to a honeycomb substrate.

When the hydrophobic zeolite of the present invention is used as an adsorbent for organic compounds, it may be mixed with other zeolite, for example a zeolite having a FAU structure such as USY, or a zeolite having a MFI structure such as ZSM-5.

### EXAMPLES

Now, the present invention will be described in further detail with reference to Examples. However, it should be understood that the present invention is by no means restricted to such specific Examples.

### <Measurement of water adsorption and toluene adsorption>

The adsorption was measured by a volumetric adsorption measuring apparatus (BELSORP MAXII: manufactured by MicrotracBEL Corp.). The sample was pre-treated at 350°C for 2 hours in a vacuum of 10 Pa or below. The adsorption was measured at a temperature of 25°C.

### <Measurement of ¹H MAS NMR>

¹H MAS NMR was measured by a solid-state NMR instrument Varian nuclear magnetic resonance spectrometers VNMRS-400, while a sample tube was rotated at a number of revolutions of 15 kHz. The chemical shift was on the basis of the chemical shift of tetramethylsilane (assigned as 0 ppm). The amount of the hydroxy groups was quantitatively determined in accordance with a calibration curve of hydrogen amount prepared from benzene in deuterated dimethylsulfoxide. Further, as a sample, a sample dehydrated by vacuum deaeration at 400°C for 5 hours was used.

### Example 1

10 g of a commercial proton type BEA-zeolite (HSZ-940HOA, manufactured by Tosoh Corporation, SiO₂/Al₂O₃ molar ratio: 40) was added to 100 g of 2N hydrochloric acid, followed by stirring at 70°C for 2 hours. The mixture was subjected to solid-liquid separation, washed with 2L of hot pure water and dried at 110°C overnight. The obtained dealuminated zeolite had a SiO₂/Al₂O₃ molar ratio of 480 as measured by ICP spectrometry.

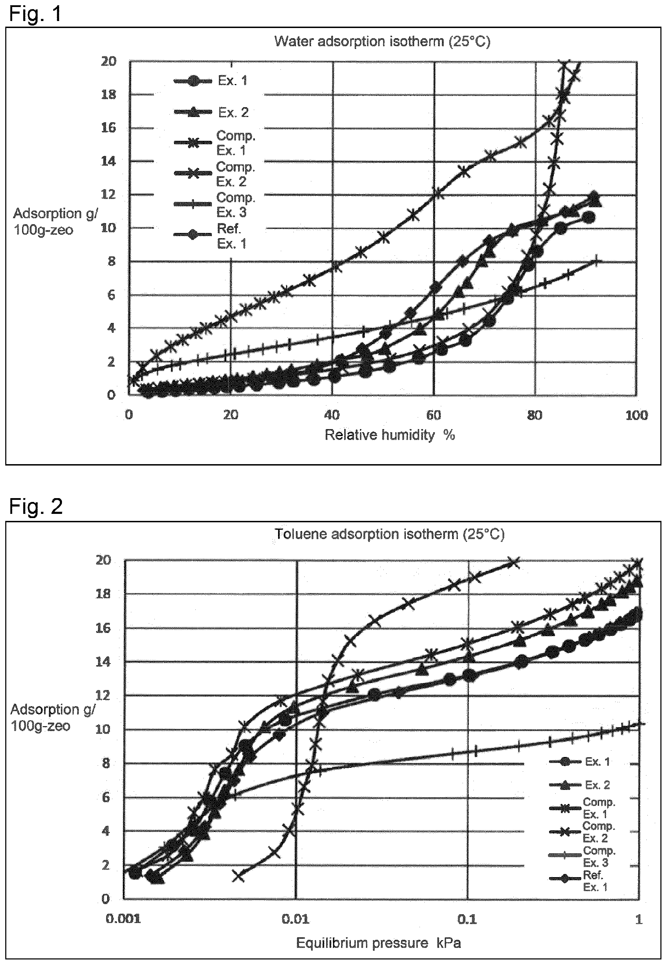

The dealuminated zeolite was subjected to heat treatment (contact with water vapor) at 840°C, in a 80 vol% water vapor atmosphere for 2 hours to obtain a hydrophobic zeolite of the present invention. It had a SiO₂/Al₂O₃ molar ratio of 480. Further, the water adsorption and the toluene adsorption at 25°C were shown in Figs. 1 and 2 and Table 1.

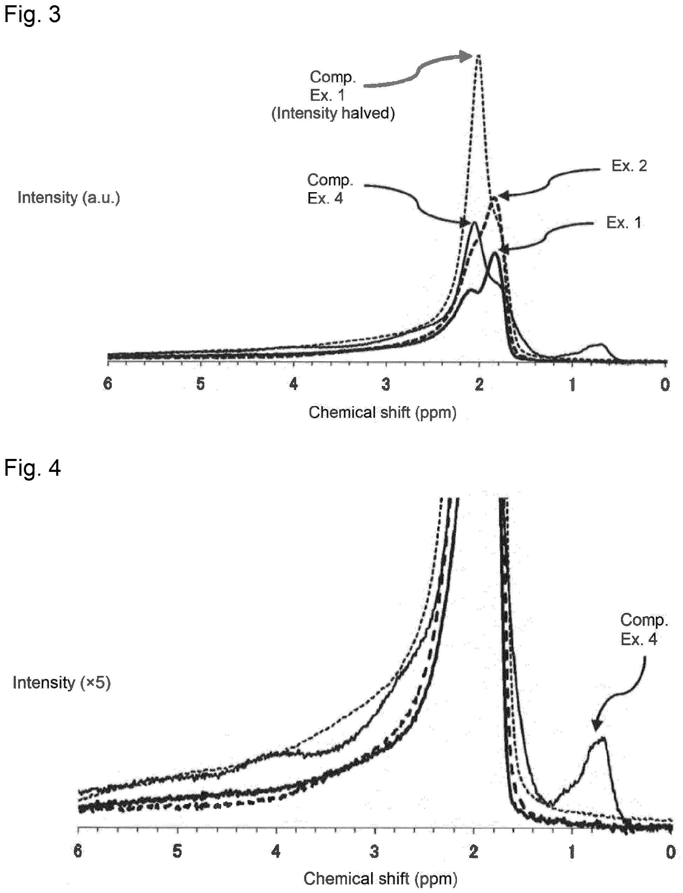

For the hydrophobic zeolite of the present invention obtained in Example 1, a ¹H MAS NMR spectrum was measured. The results are shown in Fig. 3. Further, the intensity (Y axis) of the spectrum in this Fig. was magnified 5 times and shown in Fig. 4. Further, the amounts of hydroxy groups calculated from the integrated area of the peak in the vicinity of chemical shift 0.7 ppm and the sum of the integrated areas of the peak in the vicinity of 1.8 ppm and the peak in the vicinity of 2.2 ppm, are shown in Table 2.

As evident from Fig. 3, the hydrophobic zeolite of the present invention obtained in Example 1 had a main peak in the vicinity of chemical shift 1.8 ppm and had a shoulder peak in the vicinity of 2.2 ppm. Further, as evident from Fig. 4, the hydrophobic zeolite of the present invention obtained in Example 1 had no peak in the vicinities of chemical shifts 0.7 ppm, 4 ppm and 5 ppm.

### Example 2

The dealuminated zeolite before the water vapor treatment, obtained in Example 1, was subjected to heat treatment (contact with water vapor) at 740°C in a 60 vol% water vapor atmosphere for 2 hours to obtain a hydrophobic zeolite of the present invention. It had a SiO₂/Al₂O₃ molar ratio of 480. Further, the water adsorption and the toluene adsorption at 25°C are shown in Figs. 1 and 2 and Table 1.

For the hydrophobic zeolite of the present invention obtained in Example 2, a ¹H MAS NMR spectrum was measured. The results are shown in Fig. 3. Further, the intensity (Y axis) of the spectrum in this Fig. was magnified 5 times and shown in Fig. 4. Further, the amounts of hydroxy groups calculated from the integrated area of the peak in the vicinity of chemical shift 0.7 ppm and the sum of the integrated areas of the peak in the vicinity of 1.8 ppm and the peak in the vicinity of 2.2 ppm, are shown in Table 2.

As evident from Fig. 3, the hydrophobic zeolite of the present invention obtained in Example 2 had a main peak in the vicinity of chemical shift 1.8 ppm and had a shoulder peak in the vicinity of 2.2 ppm. Further, as evident from Fig. 4, the hydrophobic zeolite of the present invention obtained in Example 2 had no peak in the vicinities of chemical shifts 0.7 ppm, 4 ppm and 5 ppm.

### Comparative Example 1

For the dealuminated zeolite having a SiO₂/Al₂O₃ molar ratio of 480, before the water vapor treatment obtained in Example 1, without the water vapor treatment, the water adsorption and the toluene adsorption at 25°C were measured, and the results are shown in Figs. 1 and 2 and Table 1.

For the dealuminated zeolite having a SiO₂/Al₂O₃ molar ratio of 480, before the water vapor treatment obtained in Example 1, ¹H MAS NMR spectrum was measured. The results are shown in Fig. 3. For the spectrum in Comparative Example 1, the intensity of the Y axis was halved for comparison with other spectra. Further, the intensity (Y axis) of the spectrum in this Fig. was magnified 5 times and shown in Fig. 4. Further, the amounts of hydroxy groups calculated from the integrated areas of the peak in the vicinity of chemical shift 0.7 ppm and the sum of the integrated areas of the peak in the vicinity of 1.8 ppm and the peak in the vicinity of 2.2 ppm, are shown in Table 2.

As evident from Fig. 3, the dealuminated zeolite having a SiO₂/Al₂O₃ molar ratio of 480, before the water vapor treatment obtained in Example 1, had a main peak in the vicinity of chemical shift 2.2 ppm and had a shoulder peak in the vicinity of 1.8 ppm. Further, as evident from Fig. 4, the dealuminated zeolite before the water vapor treatment had no peak in the vicinity of chemical shift 0.7 ppm but had a peak in the vicinity of 4 ppm to 5 ppm.

### Comparative Example 2

For a commercial USY hydrophobic zeolite (manufactured by Tosoh Corporation, SiO₂/Al₂O₃ molar ratio: 115), the water adsorption and the toluene adsorption at 25°C were measured, and the results are shown in Figs. 1 and 2 and Table 1.

### Comparative Example 3

For a commercial MFI hydrophobic zeolite (manufactured by Tosoh Corporation, SiO₂/Al₂O₃ molar ratio: 1880), the water adsorption and the toluene adsorption at 25°C were measured, and the results are shown in Figs. 1 and 2 and Table 1.

### Comparative Example 4

For the commercial proton type BEA-zeolite used as the raw material in Example 1, a ¹H MAS NMR spectrum was measured. The results are shown in Fig. 3. Further, the intensity of the spectrum in this Fig. was magnified 5 times and shown in Fig. 4. Further, the amounts of hydroxy groups calculated from the integrated area of the peak in the vicinity of chemical shift 0.7 ppm and the sum of the integrated areas of the peak in the vicinity of 1.8 ppm and the peak in the vicinity of 2.2 ppm, are shown in Table 2.

As evident from Fig. 3, the commercial proton type BEA-zeolite had a main peak in the vicinity of chemical shift 2.2 ppm and had a shoulder peak in the vicinity of 1.8 ppm. Further, as evident from Fig. 4, the commercial proton type BEA-zeolite had peaks in the vicinities of chemical shifts 0.7 ppm, 4 ppm and 5 ppm.

### Reference Example 1

In accordance with Example 2 of JP-A-2008-080195, a zeolite having an increased SiO₂/Al₂O₃ molar ratio was subjected to heat treatment (contact with water vapor) at 850°C in a 10 vol% water vapor atmosphere for 1 hour to obtain BEA-zeolite in Reference Example 1. It had a SiO₂/Al₂O₃ molar ratio of 530. Further, the water adsorption and the toluene adsorption at 25°C are shown in Figs. 1 and 2 and Table 1.

**[Table 1]**

| | Water adsorption | | Toluene adsorption |
|---|---|---|---|
| | RH 10 | RH 60 | 0.01 kPa |
| Example 1 | 0.3 | 2.5 | 10.8 |
| Example 2 | 0.6 | 4.6 | 11.4 |
| Comparative Example 1 | 3.2 | 11.8 | 12.2 |
| Comparative Example 2 | - | 3.0 | 5.0 |
| Comparative Example 3 | - | 4.8 | 7.3 |
| Reference Example 1 | 0.5 | 6.4 | 10.3 |

| | | | |
|---|---|---|---|
| Adsorption: represented by the mass (g) per 100 g of zeolite | | | |

As evident from Figs. 1 and 2 and Table 1, the hydrophobic zeolite of the present invention had both high hydrophobicity and high organic compound adsorption capability.

As an adsorbent for organic compounds, a zeolite having a small water adsorption, that is a highly hydrophobic zeolite, has been desired, with a view to increasing the volatile organic compound adsorption and increasing the adsorbent regeneration efficiency. With the zeolite of the present invention, which has high hydrophobicity which has not been achieved by conventional zeolites, a very effective adsorbent can be provided.

**[Table 2]**

| Amount of OH groups (×10²⁰ groups/g) quantitatively determined by ¹H MAS NMR | | |
|---|---|---|
| | 0.7 ppm | 1.8 ppm + 2.2 ppm |
| Example 1 | - | 1.52 |
| Example 2 | - | 2.23 |
| Comparative Example 1 | - | 7.84 |
| Comparative Example 4 | 0.27 | 1.72 |

### Example 3

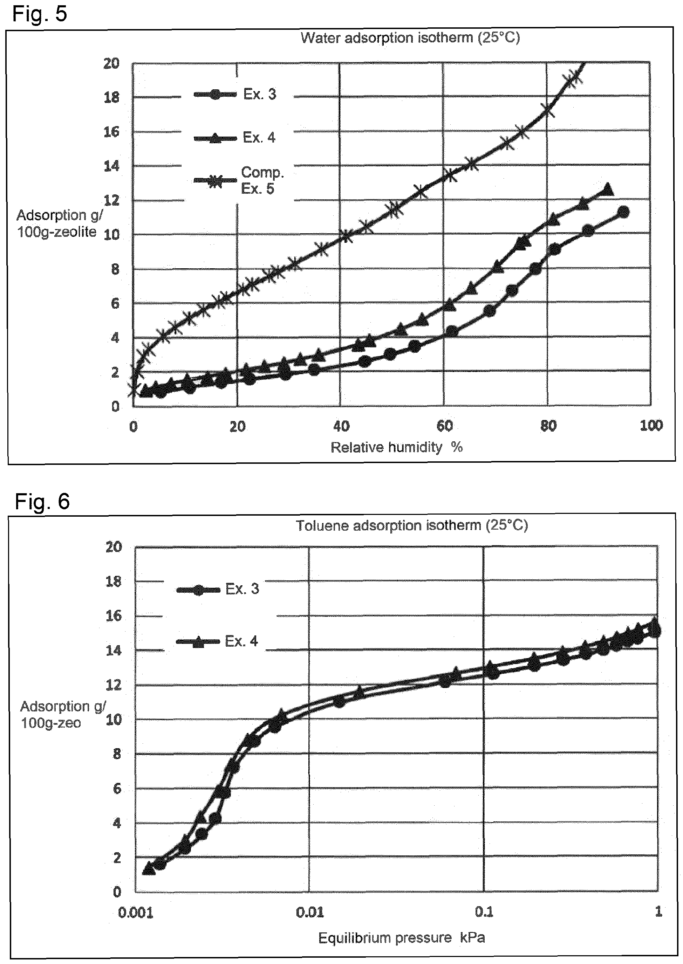

10 g of a commercial proton type BEA-zeolite (HSZ-940HOA, manufactured by Tosoh Corporation, SiO₂/Al₂O₃ molar ratio: 40) was subjected to heat treatment (contact with water vapor) at 780°C in a 70 vol% water vapor atmosphere for 2 hours to obtain a hydrophobic zeolite of the present invention. It had a SiO₂/Al₂O₃ molar ratio of 40. Further, the water adsorption and the toluene adsorption at 25°C are shown in Figs. 5 and 6 and Table 3.

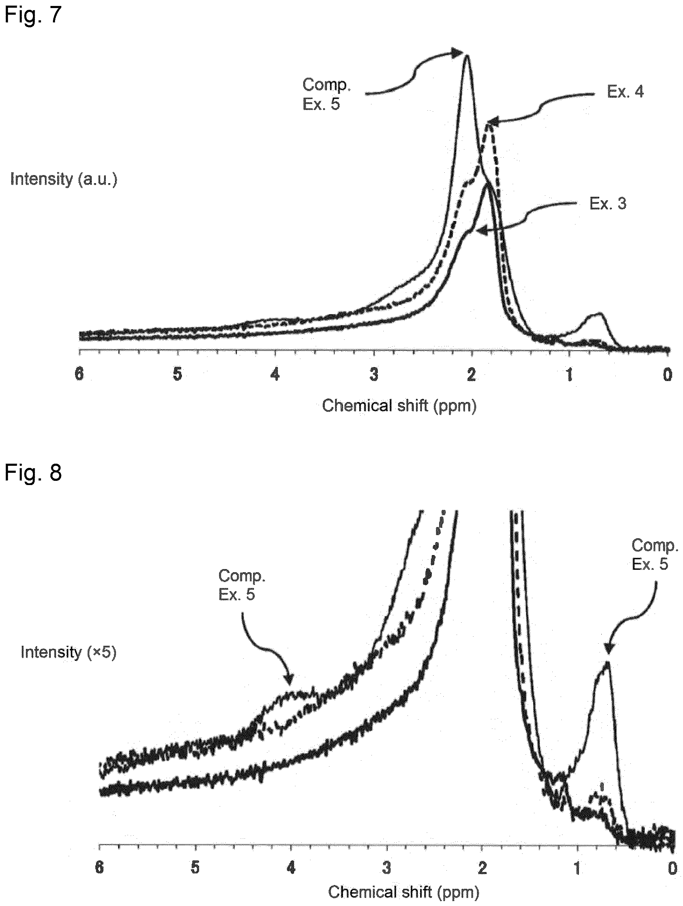

For the hydrophobic zeolite of the present invention obtained in Example 3, a ¹H MAS NMR spectrum was measured. The results are shown in Fig. 7. Further, the intensity (Y axis) of the spectrum in this Fig. was magnified 5 times and shown in Fig. 8. Further, the amounts of hydroxy groups calculated from the integrated area of the peak in the vicinity of chemical shift 0.7 ppm and the sum of the integrated areas of the peak in the vicinity of 1.8 ppm and the peak in the vicinity of 2.2 ppm, are shown in Table 4.

As evident from Fig. 7, the hydrophobic zeolite of the present invention obtained in Example 3 had a main peak in the vicinity of 1.8 ppm and had a shoulder peak in the vicinity of 2.2 ppm. Further, as evident from Fig. 8, the hydrophobic zeolite of the present invention obtained in Example 3 had no peak in the vicinities of chemical shifts 4 ppm and 5 ppm.

### Example 4

10 g of a commercial BEA-zeolite containing an organic structure-directing agent (HSZ-940NHA, manufactured by Tosoh Corporation, SiO₂/Al₂O₃ molar ratio: 41) was subjected to heat treatment (contact with water vapor) at 740°C in a 70 vol% water vapor atmosphere for 2 hours to obtain a hydrophobic zeolite of the present invention. It had a SiO₂/Al₂O₃ molar ratio of 41. Further, the water adsorption and the toluene adsorption at 25°C are shown in Figs. 5 and 6 and Table 3.

For the hydrophobic zeolite of the present invention obtained in Example 4, a ¹H MAS NMR spectrum was measured. The results are shown in Fig. 7. Further, the intensity (Y axis) of the spectrum in this Fig. was magnified 5 times and shown in Fig. 8. Further, the amounts of hydroxy groups calculated from the integrated area of the peak in the vicinity of chemical shift 0.7 ppm and the sum of the integrated areas of the peak in the vicinity of 1.8 ppm and the peak in the vicinity of 2.2 ppm, are shown in Table 4.

As evident from Fig. 7, the hydrophobic zeolite of the present invention obtained in Example 4 had a main peak in the vicinity of 1.8 ppm and had a shoulder peak in the vicinity of 2.2 ppm. Further, as evident from Fig. 8, the hydrophobic zeolite of the present invention obtained in Example 4 had no peak in the vicinities of chemical shifts 4 ppm and 5 ppm.

### Comparative Example 5

For the commercial proton type BEA-zeolite (HSZ-940HOA, manufactured by Tosoh Corporation, SiO₂/Al₂O₃ molar ratio: 40) used as the raw material in Example 3, the water adsorption at 25°C is shown in Fig. 5 and Table 3.

For the commercial proton type BEA-zeolite used as the raw material in Example 3, a ¹H MAS NMR spectrum was measured. The results are shown in Fig. 7. Further, the intensity (Y axis) of the spectrum in this Fig. was magnified 5 times and shown in Fig. 8. Further, the amounts of hydroxy groups calculated from the integrated area of the peak in the vicinity of chemical shift 0.7 ppm and the sum of the integrated areas of the peak in the vicinity of 1.8 ppm and the peak in the vicinity of 2.2 ppm, are shown in Table 4.

As evident from Fig. 7, the commercial proton type BEA-zeolite used as the raw material in Example 3 had a main peak in the vicinity of 2.2 ppm and had a shoulder peak in the vicinity of 1.8 ppm.

**[Table 3]**

| | Water adsorption | Toluene adsorption |
|---|---|---|
| | RH 60 | 0.01 kPa |
| Example 3 | 4.1 | 10.4 |
| Example 4 | 5.7 | 10.8 |
| Comparative Example 5 | 13.2 | - |

| | | |
|---|---|---|
| Adsorption: represented by the mass (g) per 100 g of zeolite | | |

**[Table 4]**

| Amount of OH groups (×10²⁰ groups/g) quantitatively determined by ¹H MAS NMR | | |
|---|---|---|
| | 0.7 ppm | 1.8 ppm + 2.2 ppm |
| Example 3 | 0.02 | 1.48 |
| Example 4 | 0.05 | 2.09 |
| Comparative Example 5 | 0.27 | 1.72 |

As evident from Figs. 5 and 6 and Table 3, the hydrophobic zeolite of the present invention had both high hydrophobicity and high organic compound adsorption capability.

The present invention has been described in detail with reference to specific embodiments, however, it is apparent to those skilled in the art that various changes and modifications are possible without departing from the concept and the range of the present invention.

The entire disclosures of Japanese Patent Application No. 2019-137110 filed on July 25, 2019 and Japanese Patent Application No. 2020-040789 filed on March 10, 2020, including specifications, claims, drawings and summaries are incorporated herein by reference in their entireties.

### INDUSTRIAL APPLICABILITY

The hydrophobic zeolite of the present invention is useful as an adsorbent for organic compounds discharged from painting equipment, printing equipment, industrial product cleaning equipment, etc.

## Claims

1. A hydrophobic zeolite which has a water adsorption of (6 g/100 g zeolite) or less at 25°C at RH 60% and a toluene adsorption of (9 g/100 g zeolite) or more at 25°C under 0.01 kPa.

2. The hydrophobic zeolite according to Claim 1, which has a BEA structure.

3. The hydrophobic zeolite according to Claim 1 or 2, which has an amount of hydroxy groups of 3×10²⁰ groups/g or less, calculated from the sum of the integrated areas of the peak in the vicinity of chemical shift 1.8 ppm and the peak in the vicinity of 2.2 ppm in a ¹H MAS NMR spectrum, and an amount of hydroxy groups of 0.1×10²⁰ groups/g or less calculated from the integrated area of the peak in the vicinity of 0.7 ppm.

4. The hydrophobic zeolite according to any one of Claims 1 to 3, which has a crystal size of from 0.02 to 2.0 µm.

5. The hydrophobic zeolite according to any one of Claims 1 to 4, which contains one or more metals selected from the group consisting of sodium, potassium, cesium, iron, copper, silver, platinum, ruthenium, rhodium, palladium and iridium.

6. The hydrophobic zeolite according to any one of Claims 1 to 5, which has a SiO₂/Al₂O₃ molar ratio within a range of from 100 to 500.

7. A method for producing the hydrophobic zeolite as defined in any one of Claims 1 to 6, which comprises bringing a zeolite to be a base material into contact with an acidic solution and then into contact with water vapor at a temperature of from 600°C to 900°C.

8. The hydrophobic zeolite according to any one of Claims 1 to 5, which has a SiO₂/Al₂O₃ molar ratio within a range of from 10 to 100.

9. A method for producing the hydrophobic zeolite as defined in any one of Claims 1 to 5 and 8, which comprises bringing a zeolite to be a base material into contact with water vapor at a temperature of from 500°C to 900°C.

10. The method for producing the hydrophobic zeolite according to Claim 9, wherein the zeolite to be a base material is a zeolite crystallized without using an organic structure-directing agent.

11. The method for producing the hydrophobic zeolite according to Claim 9, wherein the zeolite to be a base material is a zeolite crystallized by using an organic structure-directing agent, and the method of bringing the zeolite into contact with water vapor at a temperature of from 500 to 900°C is a method of bringing the zeolite into contact with the water vapor in a step of thermally decomposing the organic structure-directing agent.

12. An adsorbent for organic compounds, which contains the hydrophobic zeolite as defined in any one of Claims 1 to 6 and 8.

13. A method for removing an organic compound, which comprises bringing the adsorbent for organic compounds as defined in Claim 12 into contact with a fluid containing at least one organic compound to remove the organic compound from the fluid.
